# EUROPEAN PATENT APPLICATION

(11) **EP 3 121 438 A1**
(43) Date of publication of application: **25.01.2017**
(21) Application number: 16179963.0
(22) Date of filing: 18.07.2016
(51) Int. Cl.: F02N 11/08

(54) **AUTOMATIC SHUTDOWN FOR A VEHICLE**

(30) Priority: 20.07.2015 GB 201512731
(71) Applicant: Terex GB Limited, Dungannon County Tyrone BT71 4DR (GB)
(72) Inventor: PRICE, Stephen, Honeybourne, Worcestershire WR11 7QG (GB); WORTHINGTON, Carl, Nuneaton, Warwickshire CV109AG (GB)
(74) Representative: Moser Götze & Partner Patentanwälte mbB

(57) **Abstract**

An engine control system for automatic shutdown of an industrial vehicle engine, the control system comprising a sensor configured to determine the absence of an operator from a vehicle-operating seat; a handbrake position sensor configured to determine whether a handbrake is in an applied position; a temperature sensor for measuring the temperature of engine coolant; a battery sensor for measuring the condition of a battery; and a logic controller configured to gather data from the sensors and to shut down the engine according to a predefined shutdown protocol related to inputs from each of the sensors.

## Description

### Field of the invention

The present invention relates to an engine control system for automatic shutdown of an industrial vehicle engine. The present invention further relates to a method of controlling automatic shutdown of an industrial vehicle engine.

### Background of the invention

Working in an industrial vehicle such as a dumper truck can involve an operator regularly leaving the vehicle, for example to attend to other duties on site. When this occurs, a vehicle is often left with its engine running. This leads to excessive fuel consumption, reduced time between services, reduced diesel particulate filter life, and so to needless expense and air pollution. The intervals between services for industrial vehicles are based on hours for which the engine has been running, so that unnecessary running of the engine disadvantageously reduces the time between services. Running of the engine whilst the vehicle is not in use leads to build-up of carbon on a diesel particulate filter, as the engine may not be at a high enough temperature to burn off carbon.

In addition, it may be against site regulations to leave an empty vehicle with a running engine, as it can be a security risk. Although the operator should turn off the engine with a key before leaving the vehicle, this does not consistently take place, particularly when an operator believes themselves to be leaving a vehicle for a short time only.

It is known, therefore, for such industrial vehicles to have an automatic shutdown system, so that a vehicle will automatically switch off its engine when left for a certain length of time. Such a system may rely on various conditions being reached by the engine and related systems.

However, there are downsides to existing shutdown systems. For example, not all of the required parameters may be suitable for industrial vehicles.

In the patent document US 4381042 A an excessive idle termination system for shutting down a motor vehicle engine is disclosed which senses one or more input conditions which are indicative of an idle condition and, when the sensed condition has existed for a predetermined period of time, shuts down the engine. Sensed input conditions can include seat occupancy, actuation of emergency brake, and engagement of transmission. It is also described that there is the possibility of a temperature override wherein the unit is prevented from shutting down the engine unless the engine has warmed up.

Moreover the patent document US 5203440 A shows a system in which an interlock is put into a potential defeat mode as soon as the operator leaves the seat, provided that the vehicle parking brake is engaged.

Furthermore the patent US 4294327 A reveals a safety interlock for a vehicle in which the interlock circuit disables the ignition if the engine is not running and the transmission is engaged so the engine cannot be started under unsafe conditions. The engine is also disabled if, after it is running, the seat becomes unoccupied.

In addition US 3838748 A discloses a safety mechanism for protecting the driver of a vehicle by disabling the vehicle engine if the operator vacates his seat. The mechanism also includes a manual override which disables the safety mechanism for a predetermined time period.

Further the patent document GB 1477231 A discloses an automatic control system for vehicles in which the engine is automatically stopped when the vehicle motion is arrested and the engine is automatically driven when in response to the depression of a clutch pedal for starting the vehicle, for example, the engine may be automatically arrested at a crossing or the like. The engine control system is automatically disabled when the stored voltage of the battery falls below a predetermined low value. Moreover the function of the control system is automatically cancelled in the event that the operator leaves the vehicle.

Furthermore the patent application publication JP 2009270527 A describes an engine automatic stop restart device in which restarting of the engine is prohibited when the driver is not seated in the driver's seat.

The present invention seeks to overcome or at least mitigate the problems of the prior art.

### Summary of the invention

According to an aspect of the invention there is provided an engine control system for automatic shutdown of an industrial vehicle engine, the control system comprising a sensor configured to determine the absence of an operator from a vehicle-operating seat; a handbrake position sensor configured to determine whether a handbrake is in an applied position; a temperature sensor for measuring the temperature of engine coolant; a battery sensor for measuring the condition of a battery; and a logic controller configured to gather data from the sensors and to shut down the engine according to a predefined shutdown protocol related to inputs from each of the sensors.

The use of a protocol with inputs from multiple sources increases the reliability of the system, making unwanted shutdown less likely to occur.

The predefined shutdown protocol may include the operator being absent from the seat. The seat sensor causes automatic shutdown advantageously to occur when the operator has left the vehicle. This improves security, as no action need be taken by the operator before leaving the vehicle to ensure that shutdown takes place.

The predefined shutdown protocol may include the handbrake being in an applied position. The handbrake position sensor advantageously prevents shutdown when the handbrake is not applied.

The predefined shutdown protocol may include determining whether the engine coolant is at a certain predetermined temperature level, sufficient to facilitate automatic restarting of the engine. The predefined shutdown protocol may include the engine coolant being at a temperature of 303K or above, 313K or above, 323K or above, 333K or above, 343K or above, 353K or above, or other level depending on the type of engine, coolant or working conditions. Measuring the coolant temperature is an effective method of ensuring that engine temperature is high enough to allow the engine to quickly return to working temperature on restart.

The predefined shutdown protocol may include determining whether the engine coolant is below a certain predetermined temperature level, preventing the engine which is near its maximum operating temperature from shutting down stopping the cooling system of the engine from functioning and allowing the heat in the engine block to transfer to the water and cause it to boil. This function ensures the engine remains operating and allows the cooling system to cool the engine sufficiently that stopping will not risk coolant boiling. The predefined shutdown protocol may include the engine coolant being at a temperature range between 363K (90°C) and 393K (120°C) or below, preferably at a temperature of 383K (110°C) or below.

The predefined shutdown protocol may include determining whether the battery has a certain predetermined level of charge, sufficient to facilitate restarting of the engine. The predefined shutdown protocol may include the battery holding a charge of at least 10V, 11V, 12V or other suitable voltage depending on the type of battery and working conditions. Measuring battery charge ensures that the battery has enough charge for the engine to restart.

The control system may further comprise an automatic shutdown override system configured to input to the logic controller, wherein the predefined shutdown protocol may include the automatic shutdown override system being off. The logic controller may be configured to restart the engine according to a predefined restart protocol related to inputs from one or more of the sensors. The predefined restart protocol may include the operator being present in the seat. This ensures that the engine will not restart without an operator, improving security. The logic controller may be configured to restart the engine when the operator is present in the seat.

The control system may include a position sensor configured to determine the position of a forward/reverse control lever, wherein the restart protocol may include the forward/reverse control lever being in a neutral position. This safety feature advantageously prevents the engine from starting whilst the vehicle is in gear.

The control system may further comprise an enclosure sensor configured to determine the position of an enclosure for the engine, wherein the predefined restart protocol may include the enclosure being in a closed position. This safety feature prevents the engine from restarting whilst the engine enclosure is in an open position; e.g. whilst maintenance to the engine may be taking place.

The control system may further comprise a position sensor configured to determine the position of the handbrake, wherein the predefined restart protocol may include the handbrake being in an applied position. The handbrake being applied improves safety, as it prevents the vehicle from moving inadvertently when the engine restarts.

The control system may further comprise a throttle pedal position sensor configured to determine the position of a throttle pedal, wherein the predefined restart protocol includes the throttle pedal being in an idle position.

There is also provided a method for controlling automatic shutdown of an industrial vehicle engine, the method comprising the steps of:
a) providing an engine control system comprising:
   a sensor configured to determine the absence of an operator from a vehicle-operating seat;
   a handbrake sensor configured to determine whether a handbrake is in an applied position;
   a temperature sensor for measuring the temperature of engine coolant;
   a battery sensor for measuring the condition of a battery; and
   a logic controller configured to gather data from the sensors;
b) shutting down the engine according to a predefined shutdown protocol related to inputs from each of the sensors.

The predefined shutdown protocol may include the operator being absent from the seat.

The predefined shutdown protocol may include the handbrake being in an applied position.

The predefined shutdown protocol may include the engine coolant being at a predetermined temperature sufficient to facilitate automatic restarting of the engine. The predefined shutdown protocol may include the engine coolant being at a temperature of 303K or above, 313K or above, 323K or above, 333K or above, 343K or above, 353K or above, or other level depending on the type of engine, coolant or working conditions.

The predefined shutdown protocol may include determining whether the engine coolant is below a certain predetermined temperature level, preventing the engine which is near its maximum operating temperature from shutting down stopping the cooling system of the engine from functioning and allowing the heat in the engine block to transfer to the water and cause it to boil. This function ensures the engine remains operating and allows the cooling system to cool the engine sufficiently that stopping will not risk coolant boiling. The predefined shutdown protocol may include the engine coolant being at a temperature range between 363K (90°C) and 393K (120°C) or below, preferably at a temperature of 383K (110°C) or below.

The predefined shutdown protocol may include the battery holding a predetermined level of charge sufficient to facilitate restarting of the engine. The predefined shutdown protocol may include the battery holding a charge of at least 10V, 11 V, 12V or other suitable voltage depending on the type of battery and working conditions. Measuring battery charge ensures that the battery has enough charge for the engine to restart.

The control system may further comprise an automatic shutdown override system configured to input to the logic controller, wherein the predefined shutdown protocol includes the automatic shutdown override system being off.

The method may further comprise the step of:
c) restarting the engine according to a predefined restart protocol related to inputs from one or more of the sensors.

The predefined restart protocol may include the operator being present in the seat. The engine may be restarted when the operator is present in the seat.

The control system may include a position sensor configured to determine the position of a forward/reverse control lever, wherein the predefined restart protocol includes the forward/reverse control lever being in a neutral position. This safety feature advantageously prevents the engine from restarting whilst the vehicle is in gear.

The control system may further comprise an enclosure sensor configured to determine the position of an enclosure for the engine, wherein the predefined restart protocol includes the enclosure being in a closed position.

The predefined restart protocol may include the handbrake being in an applied position.

The control system may further comprise a throttle pedal position sensor configured to determine the position of a throttle pedal, wherein the predefined restart protocol includes the throttle pedal being in an idle position.

### Brief description of the drawings

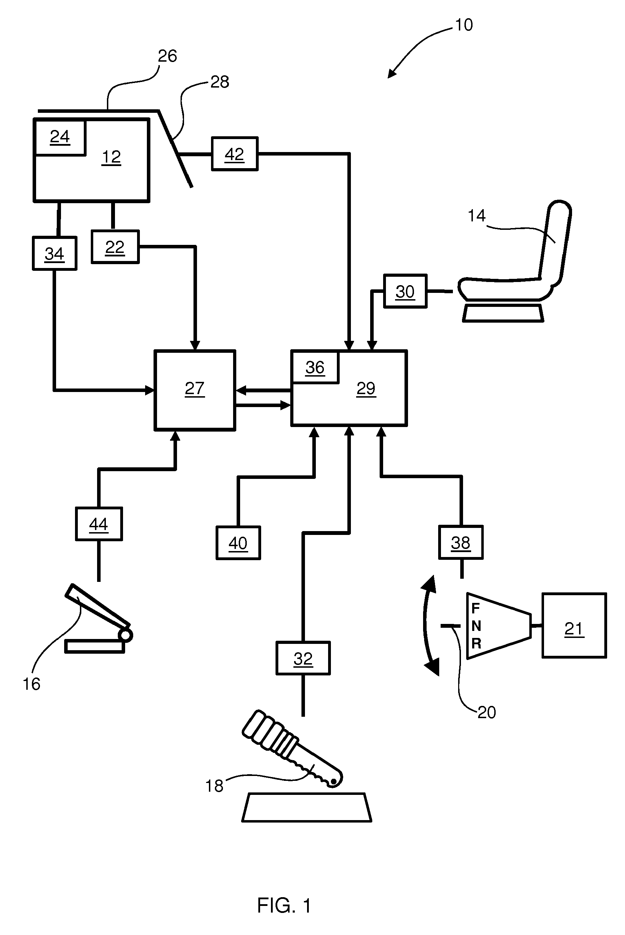

Figure 1 is a schematic of an engine control system according to an embodiment of the invention.

### Detailed description of the embodiment(s)

An engine control system for an industrial vehicle is indicated generally at 10. The control system 10 is configured for an engine 12. In this embodiment, the engine 12 is for a dumper truck or other industrial vehicle (not shown).

The vehicle has standard features as shown schematically in Figure 1: a seat 14 for an operator, a throttle pedal 16 and a handbrake 18. A forward/reverse control lever 20 is used by the operator to move a transmission 21 between forward and reverse positions. The lever 20 has a neutral position between the forward and reverse positions. When moved to the neutral position the engine 12 cannot cause the vehicle to move in either direction.

The engine 12 is protected by an enclosure 26. The enclosure 26 is movable to provide access to the engine, e.g. for maintenance. In this embodiment, the enclosure 26 has an access door 28 which is movable between open and closed positions, though in alternative embodiments the enclosure 26 is itself movable and does not have a door. Coolant is used to control the temperature of the engine 12. A standard battery 22 is connected to the engine 12. The engine 12 also has a starter motor 24.

The control system 10 has a number of sensors configured to measure various conditions of the engine 12 and vehicle components, as described in further detail below. Data gathered from the sensors are collected by an engine control unit 27 or by a logic controller 29, depending on the sensor from which data is gathered. The engine control unit 27 feeds collected data to the logic controller 29. Based on the data gathered, the logic controller 29 selects whether to shut down the engine 12, and instructs the engine control unit 27 accordingly.

The logic controller 29 uses a predetermined shutdown protocol to select whether the engine 12 should be shut down. The shutdown protocol is related to inputs from each of the sensors, as described below.

A sensor 30 is configured to determine the absence or presence of the operator in the seat 14. In this embodiment, the sensor 30 is a pressure-activated switch 30 mounted beneath the seat 14, which is operated by the weight of the operator in the seat 14. When the operator is in the seat 14, the switch 30 is depressed. When the operator leaves the seat 14, the switch 30 is released. Data on the position of the switch 30 is sent to the logic controller 29. In alternative embodiments, the sensor 30 is some other kind of pressure sensor, or the sensor 30 is an optical sensor directed at the seat 14 to detect the presence or absence of the operator.

Absence of an operator from the seat 14 is included in the shutdown protocol. That is, when there is no operator in the seat 14, the logic controller's 29 condition for the sensor 30 is met, and the logic controller 29 is able to initiate automatic shutdown if the remaining conditions are also met. This is likely to be the final condition of the shutdown protocol, so that the operator leaving the vehicle will trigger automatic engine shutdown.

A handbrake position sensor 32 is used to determine whether the handbrake 18 is in an applied position. In this embodiment, the handbrake position sensor 32 is a proximity sensor 32 configured to detect whether the handbrake 18 is in a particular position. In this embodiment, the handbrake position sensor 32 is configured to detect a part of the handbrake latch (not shown) when the handbrake 18 is applied. Data from the sensor 32 is collected by the logic controller 29.

The shutdown protocol may include the handbrake 18 being in an applied position. The handbrake being applied is used as a further indicator that the engine 12 can be shut down, as the operator is unlikely to have left the vehicle without applying the handbrake.

The shutdown protocol may also include engine coolant temperature being above a suitable point. It is advantageous to ensure that the engine 12 is at a suitably high temperature before it is switched off. That is, whether the engine 12 is warm enough to quickly return to working temperature on restart. Advantageously, this aids the engine 12 in performing efficiently such that any exhaust after-treatment (such as a diesel particulate filter) becomes effective.

Measuring the temperature of the coolant provides an accurate reading of the engine temperature. Temperature of the engine coolant is measured by a temperature sensor 34. In this embodiment, the temperature sensor is a thermocouple 34. In alternative embodiments, other suitable temperature sensors are used, and/or engine temperature is measured at some other suitable point, rather than using the engine coolant.

Data from the temperature sensor 34 is collected by the engine control unit 27. Coolant temperature may be included in the shutdown protocol, so that the engine 12 will not be shut down unless the coolant temperature meets the logic controller's 29 condition for the temperature sensor 34. In this embodiment, a coolant temperature of 323K (50°C) or above is required to indicate that the engine 12 is at a suitably high temperature and can be switched off. In alternative embodiments, a coolant temperature of 303K (30°) or above, 313K (40°C) or above, 333K (60°C) or above, 343K (70° C) or above, or 353K (80° C) or above is required. Moreover an upper limit for the coolant temperature is set with a temperature range between 363K (90°C) and 393K (120°C), preferably at a temperature of 383K (110°C), above which the engine will not stop. Hereby it is prevented the engine which is near its maximum operating temperature from shutting down stopping the cooling system of the engine from functioning and allowing the heat in the engine block to transfer to the water and cause it to boil. This function ensures the engine remains operating and allows the cooling system to cool the engine sufficiently that stopping will not risk coolant boiling.

The shutdown protocol may include the battery 22 holding sufficient charge to allow easy restarting of the engine 12. A battery sensor 36 is used to measure the amount of charge held by the battery 22. The battery sensor 36 is in this embodiment an in-built function of the logic controller 29. In an alternative embodiment, the battery sensor is a separate sensor, and includes the necessary additional electronics.

In this embodiment, the amount of charge held by the battery 22 must be at least 12V for the logic controller 29 to allow the engine 12 to be switched off. This ensures that there is enough charge held by the battery 22 to allow easy restarting of the engine 12. In an alternative embodiment, the battery charge must be at least 11V for the logic controller 29 to allow the engine 12 to be switched off. In a further embodiment, the battery charge must be at least 10V for the logic controller 29 to allow the engine 12 to be switched off.

When the shutdown protocol conditions have been met, the logic controller 29 acts to switch off the engine 12 via the engine control system 27.

The engine control system 10 of this embodiment also includes an automatic shutdown override system 40. In this embodiment, the override system 40 is operated by a push-button (not shown). In alternative embodiments, the override system 40 is operated with some other suitable means.

The automatic shutdown override system 40 allows the operator to prevent automatic shutdown of the engine 12. The override system 40 is configured to input to the logic controller 29. When the override system 40 is turned on by the operator, the logic controller 29 cannot instruct the engine control unit 27 to shut down the engine 12. The override system 40 must be off in order for automatic shutdown to take place. Advantageously, additional actions are therefore required by the operator to prevent switch off, rather than the operator having to actively switch off the engine.

The logic controller 29 is also configured to automatically restart the engine 12 by means of the starter 24 under a predefined restart protocol. The restart protocol is related to inputs from each of the sensors. The override system 40 can be used by the operator to override the automatic restart of the engine 12.

The restart protocol may include the operator being present in the seat 14. In this embodiment, the engine 12 may be restarted when the operator is present in the seat, i.e. when the operator first becomes present in the seat. The restart protocol may include the handbrake 18 being in an applied position.

The restart protocol may also include the forward/reverse control lever 20 being in the neutral (i.e. central) position, as a safety precaution. The engine 12 will not be restarted if the lever 20 is not in the neutral position, so that the vehicle cannot automatically start to move upon start of the engine 12.

A lever sensor 38 is used to detect the position of the forward/reverse control lever 20. In this embodiment, the lever sensor 38 is an electrical switch built into the lever 20 that detects when the lever 20 is in the neutral position. In an alternative embodiment, the sensor 38 is built in to the transmission 21. For example, the sensor may be configured to detect a voltage of a coil in the gearbox, and so to determine when the transmission 21 is in neutral.

The control system 10 also has an engine enclosure sensor 42 configured to detect whether the enclosure 26 is in an open or a closed position. In this embodiment, this the sensor 42 detects whether the enclosure is in an open or a closed position, i.e. in this embodiment whether the door 28 is in an open or a closed position. The restart protocol includes the enclosure being in a closed position, i.e. in this embodiment the door 28 being in a closed position. This security measure prevents the engine 12 restarting whilst there is access to potentially moving and/or hot parts the engine 12 via the enclosure 26.

A throttle pedal position sensor 44 is configured to determine the position of the throttle pedal 16. The restart protocol may include the throttle pedal 16 being in an idle position. This further security measure prevents the engine 12 being automatically started when the vehicle may inadvertently start moving.

In an alternative embodiment, a seatbelt sensor is used to determine the absence or presence of the operator in the seat 14. A seatbelt sensor may be included in addition to the sensor 30, in order to determine whether the operator is using a seatbelt and thus complying with safety instructions. The position of the seatbelt may be included in the shutdown protocol, i.e. so that the engine 12 will not restart if the seatbelt is not fastened. The position of the seatbelt may be included in the restart protocol, i.e. so that engine 12 restarts when the seatbelt is fastened, if all other conditions of the protocol have been met.

The restart protocol may include a time limit on restarting the engine. That is, if the engine has been shut down for more than a predetermined length of time, the control system will switch off the ignition and will not restart the engine. This advantageously avoids the battery losing excessive charge due to standby load. Once the engine has been shut down for longer than the predetermined length of time, the vehicle will need to be restarted by conventional means.

The combination of the various sensors used in the shutdown and restart protocols provides a simple and secure automatic shutdown and restart system.

## Claims

1. An engine control system for automatic shutdown of an industrial vehicle engine, the control system comprising:
a sensor configured to determine the absence of an operator from a vehicle-operating seat;
a handbrake position sensor configured to determine whether a handbrake is in an applied position;
a temperature sensor for measuring the temperature of engine coolant;
a battery sensor for measuring the condition of a battery; and
a logic controller configured to gather data from the sensors and to shut down the engine according to a predefined shutdown protocol related to inputs from each of the sensors.

2. A control system according to claim 1 wherein the predefined shutdown protocol includes the operator being absent from the seat.

3. A control system according to claim 1 or claim 2 wherein the predefined shutdown protocol includes the handbrake being in an applied position.

4. A control system according to any one of claims 1 to 3 wherein the predefined shutdown protocol includes the engine coolant being at a predetermined temperature, preferably being at a temperature of 303K or above, more preferably being at a temperature of 313K or above and/or preferably being at a temperature range between 363K and 393K or below, preferably at a temperature of 383K or below.

5. A control system according to any one of claims 1 to 4 wherein the predefined shutdown protocol includes the battery holding a predetermined charge, preferably a charge of at least 11 V, more preferably a charge of at least 12V.

6. A control system according to any preceding claim further comprising an automatic shutdown override system configured to input to the logic controller, wherein the predefined shutdown protocol includes the automatic shutdown override system being off.

7. A control system according to any preceding claim wherein the logic controller is configured to restart the engine according to a predefined restart protocol related to inputs from one or more of the sensors, wherein preferably the predefined restart protocol includes the operator being present in the seat, wherein preferably the predefined restart protocol includes the handbrake being in an applied position, preferably comprising a position sensor configured to determine the position of a forward/reverse control lever, wherein preferably the predefined restart protocol includes the forward/reverse control lever being in a neutral position, preferably comprising an enclosure sensor configured to determine the position of an enclosure for the engine, wherein preferably the predefined restart protocol includes the enclosure being in a closed position, preferably comprising a throttle pedal position sensor configured to determine the position of a throttle pedal, wherein preferably the predefined restart protocol includes the throttle pedal being in an idle position.

8. A method for controlling automatic shutdown of an industrial vehicle engine, the method comprising the steps of:
a) providing an engine control system comprising:
a sensor configured to determine the absence of an operator from a vehicle-operating seat;
a handbrake position sensor configured to determine whether a handbrake is in an applied position;
a temperature sensor for measuring the temperature of engine coolant;
a battery sensor for measuring the condition of a battery; and
a logic controller configured to gather data from the sensors;
b) shutting down the engine according to a predefined shutdown protocol related to inputs from each of the sensors.

9. A method according to claim 8 wherein the predefined shutdown protocol includes the operator being absent from the seat.

10. A method according to claim 8 or claim 9 wherein the predefined shutdown protocol includes the handbrake being in an applied position.

11. A method according any one of claims 8 to 10 wherein the predefined shutdown protocol includes the engine coolant being at a predetermined temperature, preferably being at a temperature of 303K or above, more preferably being at a temperature of 313K or above and/or preferably being at a temperature range between 363K and 393K or below, preferably at a temperature of 383K or below.

12. A method according to any one of claims 8 to 11 wherein the predefined shutdown protocol includes the battery holding a predetermined charge, preferably holding a charge of at least 11V, more preferably holding a charge of at least 12V.

13. A method according to any one of claims 8 to 12 wherein the control system further comprises an automatic shutdown override system configured to input to the logic controller, wherein the predefined shutdown protocol includes the automatic shutdown override system being off.

14. A method according to any one of claims 8 to 13 further comprising the step of:
c) restarting the engine according to a predefined restart protocol related to inputs from one or more of the sensors, wherein preferably the predefined restart protocol includes the operator being present in the seat, wherein preferably the control system further comprises a position sensor configured to determine the position of a forward/reverse control lever; wherein preferably the predefined restart protocol includes the forward/reverse control lever being in a neutral position" wherein preferably the control system further comprises an enclosure sensor configured to determine the position of an enclosure for the engine, wherein preferably the predefined restart protocol includes the enclosure being in a closed position, wherein preferably the predefined restart protocol includes the handbrake being in an applied position, wherein preferably the control system further comprises a throttle pedal sensor configured to determine the position of a pedal throttle, wherein preferably the predefined restart protocol includes the throttle pedal being in an idle position.
